Europäisches Patentamt

European Patent Office

Office européen des brevets

(11) Numéro de publication : **0 662 452 A1**

# (12) DEMANDE DE BREVET EUROPEEN

(21) Numéro de dépôt : **94403043.6**

(22) Date de dépôt : **28.12.94**

(51) Int. Cl.$^6$ : **C01G 49/14**

(30) Priorité : **10.01.94 FR 9400155**

(43) Date de publication de la demande :
**12.07.95 Bulletin 95/28**

(84) Etats contractants désignés :
**AT BE CH DE DK ES GB GR IE IT LI LU NL PT SE**

(71) Demandeur : **SOCADOUR**
**Route de la Digue**
**F-40220 Tarnos (FR)**

(72) Inventeur : **Ardiaco, Jean Claude**
**201 Avenue de l'Adour**
**F-64600 Anglet (FR)**

(74) Mandataire : **CABINET BONNET-THIRION**
**95 Boulevard Beaumarchais**
**F-75003 Paris (FR)**

(54) **Procédé d'obtention de granulés de sulfate ferreux seul ou en association avec un ou plusieurs autres composants.**

(57)   Le procédé consiste à partir de sulfate ferreux heptahydraté brut, à le débarrasser dans un premier temps, par un processus connu, de son eau intercristalline et des traces d'acide résiduel, pour le soumettre à une déshydratation pour abaisser le taux d'hydratation à une valeur comprise entre 1 et 6, à lui ajouter le cas échéant d'autres composants, notamment fertilisants, et à procéder à un compactage. L e produit compacté ne reprend pas d'humidité, ne délivre pas de poussière, et accepte les autres composants.

   Les composants préférés à ajouter sont des sulfates minéraux, avantageusement liés à des groupes ammonium et potassium. En outre un ajout de sulfate de magnésium est avantageux en ce qu'il améliore la résistance du fer à l'oxydation en Fe III. Il est alors souhaitable que la quantité totale d'eau d'hydratation représente moins de 30 % en poids des granulés.

EP 0 662 452 A1

La présente invention concerne un procédé d'obtention de granulés de sulfate ferreux seul ou en association avec un ou plusieurs autres composants, selon l'application visée.

Le sulfate ferreux est un produit qui trouve de nombreuses applications, seul, combiné à d'autres composants, à l'état brut ou traité chimiquement et/ou physiquement, notamment dans le domaine du traitement des eaux et de l'agronomie.

Le sulfate ferreux est connu comme sous-produit des industries métallurgique et chimique sous forme heptahydratée ($FeSO_4$, $7H_2O$).

Lorsqu'il est destiné à des usages simples (irrigation, traitement des eaux etc.), il peut être mis en oeuvre dans son état brut.

En revanche pour d'autres applications, par exemple comme produit de traitement dans l'agriculture (anti-mousse, anti-chlorose ...), son état brut, humide et collant, le rend impropre à l'usage. Il est alors traité physiquement (séchage, additifs absorbants ...) et chimiquement (additifs neutralisants ...) pour le rendre apte à s'écouler plus aisément. Il se présente en général dans un état physique micro-cristallin mais cet état pulvérulent, parfois poussiéreux, se prête encore mal à certaines applications, notamment une distribution manuelle localisée (jardin, horticulture) ou mécanique (épandeur).

L'état physique souhaité pour le sulfate ferreux est le granulé.

Par rapport à la forme pulvérulente, le granulé apporte les avantages suivants :
- une manipulation plus aisée, un moindre salissement et une moindre dispersion ; et
- un meilleur dosage manuel du produit, une meilleure répartition au sol.

On a déjà essayé, mais sans succès, la granulation du sulfate ferreux heptahydraté selon les deux principales techniques de granulation connues : l'agglomération progressive de particules cristallines dans un circuit alternant des phases d'humidification et des phases de séchage et le compactage mécanique.

Une granulation par agglomération est délicate à réaliser dans le cas du sulfate de fer heptahydraté, en raison des caractères hygroscopique et collant de ce sel fortement hydraté qui réapparaissent au cours du processus.

De même, une granulation par compactage mécanique n'a pas permis de faire passer la masse cristalline du sulfate de fer heptahydraté à l'état de granulés solides en raison de la plasticité survenant dès que ce produit est soumis à la compression mécanique et qui empêche le resserrement des cristaux.

Par ailleurs, la tendance dans l'utilisation du sulfate ferreux heptahydraté est la diversité croissante de ses utilisations en association avec d'autres sels chimiques, en particulier dans le domaine agronomique (fertilisation, traitement des sols etc...).

Ces associations ajoutent encore des difficultés à celles rencontrées lors de la granulation. Ainsi en procédant par agglomération, la difficulté vient notamment de la nécessité de sauvegarder la structure chimique du sulfate ferreux qui est rendu actif par l'addition d'eau, de vapeur d'eau etc., nécessaires à cette technique.

La présente invention a pour but de proposer un procédé qui permette une granulation dans de bonnes conditions du sulfate ferreux seul ou en association avec d'autres composants.

Elle propose un procédé à partir de sulfate ferreux heptahydraté brut, caractérisé en ce qu'il consiste à soumettre le sulfate ferreux heptahydraté débarrassé de son eau intercristalline et des traces d'acides à une déshydratation de manière à abaisser le niveau en hydrates pour qu'il soit compris entre 1 et 6, à ajouter le cas échéant lesdits autres composants et à procéder à un compactage mécanique.

Ainsi, lorsque l'on déshydrate préalablement le sulfate ferreux heptahydraté jusque dans l'intervalle défini, le mécanisme de compactage redevient possible : la matière est devenue apte à former des granulés ou des plaquettes dont les dimensions peuvent être réglées dans une gamme étalée, par exemple pour les granulés de 1 à 6 mm, et dont la dureté est comparable à celle des produits habituellement obtenus par compactage mécanique.

De préférence, la valeur en hydrates est fixée entre 4 et 6, ceci permettant au compactage de se réaliser dans les meilleures conditions.

Il devient possible aussi grâce à l'invention de réaliser des granulés contenant d'autres composants. En effet, comme il est maintenant possible de réaliser le compactage mécanique du sulfate ferreux, on peut contourner les difficultés que l'on rencontrait en procédant à la granulation par agglomération.

Ceci est particulièrement intéressant dans les domaines agronomique et industriel pour lesquels il devient possible grâce à l'invention de fabriquer de manière simple des granulés d'engrais, par exemple antimousse, à base de sulfate ferreux associé aux différents éléments N P K.

En outre, selon un exemple particulier, on a observé que lorsque l'on associe le sulfate ferreux déshydraté à des sulfates liés de préférence à des groupes ammonium et potassium, on obtient des granulés présentant de bonnes qualités en particulier sur les trois points suivants :
- renforcement des propriétés mécaniques des granulés obtenus (dureté) ;
- accroissement de la résistance à l'oxydation du fer ferreux à l'air ;
- résistance croissante à la reprise d'humidité de l'air ambiant.

Par ailleurs, on a observé qu'avantageusement en ajoutant du sulfate de magnésium à ce type de produit, on augmente encore la résistance à la reprise d'humidité et on augmente également la résistance à l'oxydation du fer ferreux à l'air.

On a déterminé également que ces deux caractéristiques sont optimales lorsque la quantité d'eau totale correspondant aux hydrates contenus dans les différents composants (sulfate ferreux, sulfate de magnésium et sulfate de potassium et/ou d'ammonium) demeure inférieure ou égale à 30% en poids.

L'explication en est probablement donnée par la formation partielle, ou totale (suivant le pourcentage des composants entre eux) de co-sulfates de très grande stabilité chimique et de structures cristallines saccharoïdes, essentiellement rhombiques ou trigonales dont la teneur est toujours voisine de 6 molécules d'$H_2O$ pour deux groupes de sulfates associés.

Dans le domaine concerné, les sulfates minéraux présentant la masse moléculaire (M) la plus petite sont le sulfate d'ammonium ($(NH_4)_2$ $SO_4$) qui est de 132g/mole ou bien le sulfate de magnésium ($MgSO_4$) qui est de 120 g/mole. Lorsqu'ils sont associés au sulfate de fer avec une masse d'hydrates qui selon l'invention est au maximum de 6, on détermine une teneur maximale en hydrates totaux par rapport au poids total du mélange de :

$$\frac{6 \, M_{H2O}}{M_{(MgSO_4)} + M_{(FeSO_4)} + 6 \, M_{H2O}} \simeq 28,5\%$$

Le pourcentage à ne pas dépasser est fixé à environ 30% pour tenir compte également des traces d'humidité des produits industriels.

La présente invention sera mieux comprise et d'autres avantages ressortiront d'ailleurs à la lumière de la description qui va suivre d'exemples de réalisation.

Exemple 1 : Réalisation de granulés de sulfate ferreux seul.

On part de sulfate ferreux brut heptahydraté que l'on traite pour éliminer l'eau intercristalline et l'acide libre. On porte ensuite le produit obtenu dans un courant d'air chaud pendant une durée suffisante de sorte que la valeur en hydrates du sulfate ferreux se situe dans un domaine compris entre 4 et 6. Après refroidissement, le sel résultant est soumis au compactage de manière à former des granulés présentant un diamètre compris entre 2 et 5 mm. La dureté mesurée des grains est de 88 à 90% de la dureté des cristaux, valeur comparable à celle des produits habituellement obtenus par compactage (la dureté est mesurée par une méthode d'abrasion).

Les étapes d'élimination d'eau intercristalline et d'acide, de déshydratation pour éliminer les molécules d'eau de constitution, et de compactage mécanique peuvent être réalisées selon les procédés connus appropriés.

Exemple 2 Réalisation de granulés contenant du sulfate ferreux et du sulfate de potassium.

On procède selon l'exemple 1 en ajoutant du sulfate de potassium au sulfate ferreux ayant subi l'étape de déshydratation de manière à obtenir le mélange en poids suivant :
- 70% de sulfate ferreux déshydraté selon l'invention
- 30% de sulfate de potassium (contenant 0,15 à 0,30% en poids d'eau libre).

Le compactage de ce mélange se réalise dans de bonnes conditions. On obtient des granulés satisfaisants du point de vue de la stabilité physique et de la stabilité chimique.

Par comparaison on réalise le compactage du mélange suivant :
- 70% de sulfate ferreux déshydraté selon l'invention
- 30% de chlorure de potassium.

On compare ensuite les caractéristiques physiques et mécaniques des deux produits granulés obtenus. On observe que toutes ces caractéristiques sont supérieures dans l'échantillon contenant du sulfate de potassium et de plus on observe une meilleure stabilité dans le temps et une meilleure tenue à la reprise d'humidité.

L'échantillon contenant le sulfate de potassium présente une dureté des grains de l'ordre de 92-94 au test d'abrasion alors que celui contenant du chlorure de potassium se situe à 83-85 et se délite dans les jours qui suivent sa mise au stock.

Exemple 3 Réalisation de granulés contenant du sulfate ferreux, du sulfate de potassium, du sulfate d'ammonium et du sulfate de magnésium.

On réalise un compactage du mélange (en poids) suivant :
- 40% de sulfate ferreux déshydraté selon l'invention;
- 20% de sulfate d'ammonium (à 0,10-0,15% d'eau libre);
- 30% de sulfate de potassium (à 0,15-0,30 % d'eau libre) ;
- 10% de sulfate de magnésium (à 0,10-0,15 % d'eau libre ;
  en prenant soin que la quantité d'eau de constitution correspondant aux différents hydrates de ces composés reste inférieure ou égale à 30% en poids.

On mesure la résistance à l'oxydation du fer ferreux à l'air et la résistance à la reprise d'humidité dans le cas de granulés à base de ce mélange et on compare avec des granulés à base du même mélange exempt de sulfate de magnésium.

On constate des meilleurs résultats dans le cas de granulés contenant du sulfate de magnésium.

Du point de vue stabilité en stockage, les granulés suivant l'invention stockés sans précautions particulières pendant six mois n'ont pas présenté de dégradation sensible, et étaient aptes à l'ensachage.

## Revendications

1. Procédé d'obtention de granulés de sulfate ferreux seul ou en association avec un ou plusieurs autres composants à partir de sulfate ferreux heptahydraté brut, caractérisé en ce qu'il consiste à soumettre le sulfate ferreux heptahydraté débarrassé de son eau intercristalline et des traces d'acides à une déshydratation de manière à abaisser le niveau en hydrates pour qu'il soit compris entre 1 et 6, à ajouter le cas échéant lesdits autres composants et à procéder à un compactage mécanique.

2. Procédé selon la revendication 1, caractérisé en ce que le niveau en hydrates est de préférence compris entre 2 et 4.

3. Procédé selon la revendication 1 ou 2, caractérisé en ce que lesdits autres composants sont des sels minéraux apportés à l'état de sulfates.

4. Procédé selon la revendication 3, caractérisé en ce que lesdits sulfates sont liés soit à un groupe ammonium soit à un groupe potassium.

5. Procédé selon la revendication 4, caractérisé en ce que l'on réalise pour compactage un mélange de 70 % en poids de sulfate ferreux ayant un niveau d'hydrates compris entre 1 et 6 et 30% en poids de sulfate de potassium.

6. Procédé selon l'une quelconque des revendications 3 à 5, caractérisé en ce que l'on ajoute en outre du sulfate de magnésium au sulfate ferreux déshydraté.

7. Procédé selon la revendication 6, caractérisé en ce que l'on réalise pour compactage un mélange de 40% en poids de sulfate de fer contenant un niveau en hydrates compris entre 1 et 6, 10% de sulfate de magnésium, 30% de sulfate de potassium et 20% de sulfate d'ammonium.

8. Procédé selon la revendication 7, caractérisé en ce que la quantité d'eau totale correspondant aux hydrates contenus dans l'ensemble des composés du mélange est inférieure ou égale à 30% en poids.

Office européen
des brevets

## RAPPORT DE RECHERCHE EUROPEENNE

Numero de la demande

EP 94 40 3043

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE-A-27 28 047 (GIULINI CHEMIE GMBH) <br> * revendication 1 * <br> --- | 1 | C01G49/14 |
| A | FR-A-1 306 523 (FARBENFABRIKEN BAYER AG) <br> * résumé * <br> ----- | 1 | |

**DOMAINES TECHNIQUES RECHERCHES (Int.Cl.6)**

C01G

Le présent rapport a été établi pour toutes les revendications

| Lieu de la recherche | Date d'achèvement de la recherche | Examinateur |
|---|---|---|
| BERLIN | 27 Mars 1995 | Clement, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C03)